# EUROPÄISCHE PATENTSCHRIFT

(11) **EP 1 373 277 B1**
(45) Veröffentlichungstag und Bekanntmachung des Hinweises auf die Patenterteilung: **03.12.2008**
(21) Anmeldenummer: 02727373.9
(22) Anmeldetag: 07.03.2002
(51) Int. Cl.: C07F 1/08, C07F 3/06, C07F 19/00, B01J 31/22

(54) **METALLORGANISCHE GERÜSTMATERIALIEN UND VERFAHREN ZU DEREN HERSTELLUNG**
ORGANOMETALLIC BUILDING MATERIALS AND METHOD FOR PRODUCING THE SAME
MATERIAUX DE STRUCTURE ORGANOMETALLIQUE ET LEUR PROCEDE DE PRODUCTION

(30) Priorität: 08.03.2001 DE 10111230
(43) Veröffentlichungstag der Anmeldung: 02.01.2004
(73) Patentinhaber: BASF SE, 67056 Ludwigshafen (DE)
(72) Erfinder: MÜLLER, Ulrich, 67435 Neustadt (DE); HESSE, Michael, 67549 Worms (DE); LOBREE, Lisa, Philadelphia, PA 19130 (US); HÖLZLE, Markus, 67281 Kirchheim (DE); ARNDT, Jan-Dirk, 68167 Mannheim (DE); RUDOLF, Peter, 68526 Ladenburg (DE)
(74) Vertreter: Isenbruck, Günter
(86) Internationale Anmeldenummer: PCT/EP2002/002523
(87) Internationale Veröffentlichungsnummer: WO 2002/070526

(56) Entgegenhaltungen:
- EP-A- 0 790 253
- WO-A-99/05151
- US-A- 5 648 508
- ZHANG X X ET AL: "COOPERATIVE MAGNETIC BEHAVIOR IN THE COORDINATION POLYMERS CU3(TMA)2L3 (L=H2O, PYRIDINE)" JOURNAL OF APPLIED PHYSICS, AMERICAN INSTITUTE OF PHYSICS. NEW YORK, US, Bd. 87, Nr. 9, 1. Mai 2000 (2000-05-01), Seiten 6007-6009, XP000953917 ISSN: 0021-8979
- BOURNE S A ET AL: "1-D coordination polymers containing benzenedicarboxylate" CRYSTAL ENGINEERING, ELSEVIER SCIENCE PUBLISHERS, BARKING, GB, Bd. 4, Nr. 1, März 2001 (2001-03), Seiten 25-36, XP004250120 ISSN: 1463-0184
- YAGHI ET AL: "Selective binding and removal of guests in a microporous metal-organic framework" NATURE, MACMILLAN JOURNALS LTD. LONDON, GB, Bd. 378, Nr. 6558, 14. Dezember 1995 (1995-12-14), Seiten 703-706, XP002079567 ISSN: 0028-0836

## Beschreibung

Die vorliegende Erfindung betrifft ein Verfahren zur Herstellung eines metallorganischen Gerüstmaterials.

Metallorganische Gerüstmaterialien sind an sich bekannt. Hierzu verweisen wir auf die wissenschaftliche Veröffentlichung von Yaghi et. al. in J. Solid State Chem., Vol. 152 (1), 3-20, die die bisherigen Entwicklungen auf diesem technischen Gebiet zusammengefaßt. Ein Verfahren zur Herstellung derartigen Materialien wird in der EP-A 0 790 253 beschrieben. Das dort beanspruchte Verfahren zur Herstellung eines mikroporösen Materials umfaßt das Vermischen einer Lösung umfassend mindestens ein Metallion, wie darin definiert mit einem Liganden, der Substrukturen mit multidentaten funktionelle Gruppen aufweist in Gegenwart einer wie darin definierten Templat-Verbindung. Als Verwendung für derartige Materialien wird in dieser Druckschrift ein Verfahren zum Entfernen von Verunreinigungen aus Gasen und Flüssigkeiten erwähnt. Weitere Verwendungen der dort beschriebenen Materialien werden in dieser Druckschrift weder erwähnt noch angedeutet. Das dort beschriebene Verfahren, das lediglich mit sehr geringen Mengen durchgeführt wurde, weist jedoch, z.B. für Zink-Terephthalat-Gerüste, schlechte, für die großtechnischen Herstellung derartiger Materialien unbefriedigende Ausbeuten von weniger als 70% auf. Eine technisch relevante Herstellweise mit hohen Ausbeuten, wie man sie etwa zur Anwendung metallorganischer Gerüstmaterialien als Katalysatoren benötigt, wird dort wie auch im übrigen Stand der Technik, nicht beschrieben.

Somit lag eine Aufgabe der vorliegenden Erfindung in der Bereitstellung eines Verfahrens zur Herstellung von derartigen Gerüstmaterialien, das zum einen die großtechnische Herstellung in hoher Ausbeute derartiger Materialien ermöglicht und zum anderen auch zu prinzipiell neuen Materialien führt.

Es wurde nun überraschend gefunden, daß man metallorganische Gerüstsubstanzen in hoher Ausbeute herstellen kann, wenn man N-Methylpyrrolidon als Lösungsmittel bzw. als Lösungsmittellcomponente verwendet.

Somit betrifft die vorliegende Erfindung ein Verfahren zur Herstellung eines metallorganischen Gerüstmaterials umfassend die Umsetzung eines fluiden Gemischs umfassend ein Metallsalz mit mindestens einer wenigstens bidentaten zur Koordination mit Metallionen geeigneten organischen Verbindung in Gegenwart mindestens einer Base und einem Lösungsmittel, wobei das Lösungsmittel N-Methylpyrrolidon enthält, wobei das metallorganische Gerüstmaterial eine spezifische Oberfläche nach Langmuir von oberhalb 50 m²/g aufweist, wobei das Metallsalz ausgewählt wird unter Metallsalzen des Zinks oder Kupfers oder Gemischen davon und wobei die organische Verbindung ausgewählt wird unter substituierten oder unsubstituierten, einkernigen aromatischen Dicarbonsäuren.

Als Metallkomponente innerhalb des eingesetzten Metallsalzes kommen dabei die Elemente Zink, Kupfer in Frage.

Als wenigstens bidentate zur Koordination mit Metallionen geeignete organische Verbindung kommen prinzipiell alle für diese Zweck geeignete und obige Bedingungen erfüllende Verbindungen in Frage. Dabei muß die organische Verbindung insbesondere mindestens zwei Zentren aufweisen, die mit den Metallionen eines Metallsalzes, insbesondere mit den Metallen der vorgenannten Gruppen Ia, IIa, IIIa, IVa-VIIIa und Ib-VIb eine Bindung aufbauen können. Diese müssen ausgewählt werden unter:
substituierten oder unsubstituierten, ein kernigen aromatischen Dicarbonsäuren.

Im einzelnen sind beispielhaft zu nennen:
Dicarbonsäuren des Benzols.

Als Lösungsmittel wird im erfmdungsgemäßen Verfahren N-Methylpyrrolidon eingesetzt entweder alleine oder zusammen mit einem geeigneten Cosolvent. Als Cosolvent eigenen sind prinzipiell alle protischen und/oder aprotischen organischen Lösungsmittel, die in der Lage sind, die mindestens bidentaten organischen Verbindungen zu lösen. Beispielhaft zu nennen sind:
Aromatische Lösungsmittel, wie z.B. Benzol, Chlorbenzol, Toluol, Xylol oder halogenierte Kohlenwasserstoffe, wie z.B. Chloroform.

Als Basen lassen sich alle organischen Basen, die in der Lage sind, die genannten bidentaten Verbindungen zu deprotonieren, einsetzen. Im einzelnen sind zu nennen:
Triethylamin, Tetraalkylammoniumhydroxide, wie z.B. Tetrapropylammoniumhydroxid.

Demgemäß betrifft die vorliegende Erfindung auch ein Verfahren wie oben beschrieben, wobei die Base ausgewählt wird unter organischen Aminen.

Zur Herstellung der metallorganischen Gerüstmaterialien geht man z. B. wie folgt vor: Zunächst löst man die organische Verbindung in dem Lösungsmittel oder Lösungsmittelgemisch und führt anschließend, vorzugsweise unter stetigem Rühren, das Metallsalz zu. Das Zuführen des Metallsalzes kann nach jedem beliebigen Verfahren geschehen.

Sobald die Lösung homogenisiert ist, beginnt man mit der Zugabe der Base.

Den nach der Umsetzung erhaltenen Niederschlag, der das metallorganische Gerüstmaterial umfaßt, wird von der Mutterlauge des erhaltenen Reaktionsgemsichs mittels Filtration, Zentrifugation oder Sprühtrocknung abgetrennt. Zur Entfernung anhaftenden Lösungsmittels und restlicher Base kann das so abgetrennte Gerüstmaterial einem Trocknungsschritt unterzogen werden. Vorzugsweise wird während des Trocknungsschritts der Druck reduziert, um die Poren des metallorganischen Gerüstmaterials zumindest teilweise zu entleeren.

Die vorstehende genannte Abfolge von Arbeitsschritten kann auch in dem Fachmann bekannter Weise abgeändert werden bzw. die Schritte in anderer Reihenfolge durchgeführt werden.

Die erhaltenen metallorganischen Gerüstmatrialien enthalten Mikroporen, wobei vorliegend Mikroporen solche mit einem Durchmesser von 2 nm oder darunter sind, gemäß der Definition in Pure Applied Chem. 45, S. 71 ff., insbesondere S. 79 (1976). Das Vorhandensein von Mikroporen erkennt man an den mittels Sorptionsmessungen zur Bestimmung der Aufnahmekapazität der metallorganischen Gerüstmaterialien an Stickstoff bei 77K gemäß DIN 66131, 66134. Dabei deutet der typische Isothermenverlauf im Typ-I-Form auf das Vorliegen von Mikroporen hin.

Die berechneten spezifischen Oberflächen nach dem Langmuir-Modell (DIN 66131, 66134) liegen vorzugsweise oberhalb 5 m²/g, weiter bevorzugt oberhalb 50 m²/g, insbesondere oberhalb 500 m²/g und können in den Bereich bis oberhalb 2000 m²/g ansteigen.

Verwendung finden die metallorganischen Gerüstmaterialien insbesondere als Adsorbens, Trockenmittel, Flammschutzmittel, Speichermaterial oder Depot von Wirksubstanzen Sensormaterial, Pigment, elektronisches Bauteil oder als Katalysatoren, insbesondere als Katalysatoren, wo sie breit eingesetzt werden können.

Als Einsatzgebiete bei der Katalyse sind insbesondere zu nennen:
Oxidationen, Reduktionen, Ringöffnungsreaktionen, C-C-Verknüpfungen und Epoxidationen, C-C-Bindungs-Bildungen wie beispielsweise Alkylierungen, Acylierungen; Additionen wie beispielsweise Carbonylierungen, Aminierungen, Hydratisierungen, Veretherungen, Alkoxylierungen; Eliminierungen wie beispielsweise Decarbonylierungen, Decarboxylierungen, Dehydratisierungen; Dehydrierungen und Hydrierungen, Isomerisierungen, C-C-Bindungs-Spaltungen wie beispielsweise Cracken und Hydrocracken; Reformierung; Oliogomerisierungen, Polymerisationen; Reinigungskatalyse für Abgas und Abwasser, Photokatalyse.

Die organometallischen Gerüstmaterialien sind bei ihrer Verwendung als Katalysatoren insbesondere dahingehend vorteilhaft, als daß man ihre Katalysatorperformance durch Variation des Metalls und/oder der wenigstens bidenten zur Koordination mit Metallionen geeigneten organischen Verbindung variieren bzw. maßschneidern kann. So können beispielsweise Umsetzungen von C-C-Dreifachbindungen mit den erfindungsgemäßen zinkhaltigen metallorganischen Gerüstmaterialien katalysiert werden. Der erfindungsgemäße Katalysator eignet sich für eine Verwendung in einem Verfahren zur Herstellung von Verbindungen der Formeln I bzw. II 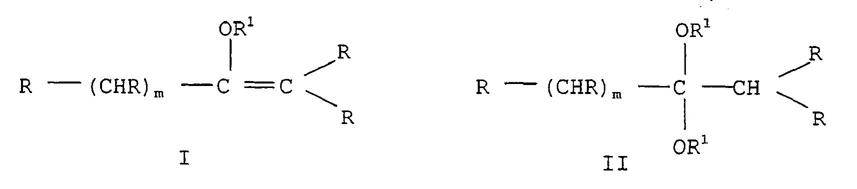 in denen R¹ Wasserstoff oder einen aliphatischen, cycloaliphatischen, araliphatischen, aromatischen oder heterocyclischen Rest oder einen Acylrest bedeutet, wobei diese Reste weitere Substituenten, die nicht mit Acetylenen oder Allenen reagieren, tragen können, die Reste R unabhängig voneinander für Wasserstoff, oder aliphatische, cycloaliphatische, araliphatische, aromatische oder heterocyclische Reste stehen, die unter Bildung eines Ringes miteinander verbunden sein können, und m für 0 oder 1 steht, durch Addition von Verbindungen der Formel III

R¹OH III

an Acetylene oder Allene der Formeln IV bzw. V 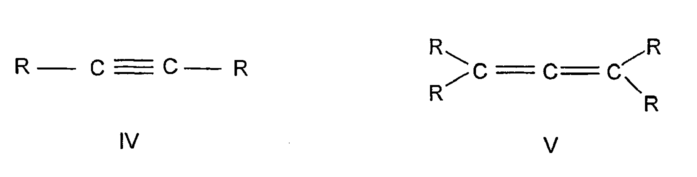 wobei R¹ und R die oben angegebene Bedeutung haben, in der Gas-, Flüssig- oder überkritischen Phase bei erhöhter Temperatur.

Als Edukte für die Umsetzung kommen beliebige Alkine oder Allene oder Gemische davon in Betracht. In der Regel wird man jedoch technisch leicht zugängliche Acetylene und Allene mit 2 bis 8 C-Atomen, bzw. 3 bis 8 C-Atomen verwenden. Besonders bevorzugt sind Propin und Allen und insbesondere Kohlenwasserstoffströme, die diese enthalten.

Die Hydroxylgruppen enthaltende Verbindung R¹OH kann Wasser, ein beliebiger Alkohol, ein Phenol oder eine Carbonsäure sein. Im allgemeinen kommen vor allem Alkohole, besonders Alkanole mit 1 bis 16 C-Atomen, einkernige Phenole und niedermolekulare Carbonsäuren, z.B. mit 1 bis 16 C-Atomen, in Betracht. Besonders bevorzugt werden niedere Alkohole und insbesondere Methanol verwendet.

Die Addition der Hydroxylgruppen enthaltenden Verbindungen erfolgt in Gegenwart des heterogen vorliegenden Katalysators in der Gas-, Flüssig- oder überkritschen Phase entweder über einem Festbett oder in einem Wirbelbett bei Temperaturen von 25 bis 400°C, vorzugsweise 100 bis 250°C und besonders bevorzugt 120 bis 200°C und Drücken in Abhängigkeit vom verwendeten Edukt, typischerweise von 0,1 bis 100 bar, insbesondere 0,8 bis 20 bar (alle Drücke bezogen auf Summe der Partialdrücke der Edukte).

So kann beispielsweise aus Propin oder Allen mit Methanol je nach Reaktionsbedingungen selektiv 2-methoxypropan oder 2,2-Dimethoxypropan gebildet werden. Die erfindungsgemäß erhältlichen Enolether der Formel I und die Dialkoxyverbindungen der Formel II sind wertvolle Zwischenprodukte zur Herstellung von Wirkstoffen und Riechstoffen. Insbesondere die Enolether sind begehrte Ausgangsstoffe z.B. zur Herstellung von γ,δ-ungesättigten Ketonen als Vorprodukte für die Herstellung von Isophytol.

Will man vor allem die Enolether gewinnen, kann man in an sich bekannter Weise die Verbindungen der Formel II durch Abspaltung von einem Mol R¹OH in die entsprechenden Enolether der Formel I überführen. Dafür existieren zahlreiche aus DE-A- 35 35 128, DE-A- 37 22 891, DE-A-38 04 162, Chemical Abstracts, Vol. 94 (19); 156 241 f und DE-A-19544450 bekannte Verfahren.

Weitere Details bezüglich des Herstellungsverfahrens für oben genannte Verbindungen sind der EP-A 1 050 510 zu entnehmen, deren diesbezüglicher Inhalt voll umfänglich in den Kontext der vorliegenden Anmeldung einbezogen wird.

Ebenso gelingt die Herstellung von Vinylestern aus der entsprechenden Säure und Acetylen, so daß generell die Aktivierung substituierter Acetylene oder Allene nach dem Fachmann bekannten Verfahren möglich ist.

Mit anderen Metallen, beispielsweise Cu, Pd, Au, Ru, Ni, Rh, Co und Pt können Hydrier- und Dehydrierreaktionen katalysiert werden, bis hin zur Umsetzung von Methanol zu Wasserstoff, etwa in Brennstoffzellenanwendungen.

Generell sind die metallorganischen Gerüstmaterialien aufgrund ihrer breiten Variabilität auch einsetzbar in Oxidations-, Epoxidations- und Reduktionsreaktionen, wenn man als Gerüstbaustein ein Metall wählt, welches in der Lage ist, seine Oxidationsstufe leicht zu ändern, wie es z.B. von vielen Metallen der Nebengruppenelemente bekannt.

Neben den Metallen als Gerüstbaustein kann jedoch auch über die Modifikation des organischen Bausteins katalytisches Verhalten gesteuert werden. Führt man in den organischen Baustein beispielsweise Carbonsäure-, Sulfonsäure, Trifluorsulfonsäure oder andere azide Reste ein, so kann das resultierende metallorganische Gerüstmaterial als heterogene Festkörpersäure in Isomerisierungen, Veresterungen, Veretherungen, Alkoxylierungen, Hydratisierungen, Dehydratisierungen, Ringschluß- und Ringöffnungsreaktionen oder C-C-Verknüpfungen verwendet werden.

### Weiterhin sind zu nennen:

C-C-Bindungs-Bildungen wie beispielsweise Alkylierungen, Acylierungen; Additionen wie beispielsweise Carbonylierungen, Aminierungen, Hydratisierungen, Eliminierungen wie beispielsweise Decarbonylierungen, Decarboxylierungen; Dehydrierungen und Hydrierungen, C-C-Bindungs-Spaltungen wie beispielsweise Cracken und Hydrocracken; Reformierung; Oxidationen und Epoxidationen; Oliogomerisierungen, Polymerisationen; Reinigungskatalyse für Abgas und Abwasser, Photokatalyse.

Versieht man den organischen Baustein mit Amingruppen oder verwendet beispielsweise Dicarboxylate des Pyridins als Baustein, so eröffnet sich der Einsatz dieser Materialien zur Basenkatalyse.

Nutzt man alkylsubstituierte aromatische Dicarbonsäuren als organische Bausteine, so kann man metallorganische Gerüstmaterialien herstellen, die sich später dazu eignen, an den Alkylketten mittels Luft Hydroperoxide zu bilden, um diese für die heterogenkatalytische selektive Epoxidation von Olefinen einzusetzen.

Über die hohe Oberfläche der metallorganischen Gerüstmaterialien und ihre Porosität können sie auch Anwendung als Adsorbentien, Trockenmittel, Flammschutzmittel, Speichermaterialien und Depots für retardierte Pharmakafreisetzung finden.

Ferner können diese Materialien als Sensoren bzw. in Sensoren für z.B. Gasdetektion oder in Anwendungsbereichen wie z.B. "Chemistry on a chip" aufgrund der hohen Porosität und Oberfläche der Materialien eingesetzt werden.

Ferner finden die Verbindungen Anwendungen in oder als elektronischen Bauteilen oder Funktionsmaterialien.

Je nach Einsatzgebiet können die erfindungsgemäßen metallorganischen Gerüstmaterialien in Pulverform oder verformt als Stränge, Pellets, Granulate, Ringe u.ä. in einem Reaktor eingesetzt werden, oder auf Träger aufgebracht werden, etwa als Beläge auf Destillationspackungen oder Netzwaben und Metall- oder Polymergestricken. Die Umsetzungen können je nach Anwendung in flüssiger, gasförmiger oder überkritischer Phase erfolgen.

Ferner finden auch alle Verformungen und Verarbeitungen aus dem Bereich Kunststoffe Verwendung, wie z.B. Extrusion, Coextrusion, Einarbeitung in Polymerblends.

Die nachfolgenden Beispiele sollen die Erfindung verdeutlichen.

### Beispiele

### Beispiel 1:

In einem Reaktionskolben wurden 24,9 g Terephthalsäure in 43,6 g 1-Methyl-2-pyrrolidon mit 8,6 g Chlorbenzol und 24, 9 g Dimethylformamid gelöst und unter Rühren auf 70 °C gebracht. Zu dieser Lösung wurden 52,2 g Zinknitrat zugegeben. Nach einer Stunden wurden in diese Suspension, ebenfalls bei 70 °C, 30 g Triethylamin zugegeben. Die entstande Lösung wurde 2 Stunden lang bei 70 °C nachgerührt. Das ausgefallene weiße Zink-Terephthalat-Gerüstmaterial wurde abfiltriert und bei Umgebungstemperatur getrocknet, und anschließend bei 200°C ausgeheizt. Der Gewichtsverlust durch beide Trocknungsschritte betrug 23 Gew.-%. Die Ausbeute, bezogen auf die eingesetzte Menge an Zink, betrug 87 %.

Die Messung der spezifischen Oberfläche erfolgte volumetrisch an einem Gerät der Fa. Micromeritics (ASAP 2000) und ergab nach dem Langmuir-Model berechnet einen Wert von 1063 m²/g.

### Beispiel 2:

In einem Reaktionskolben wurden 1320 g 1-Methyl-2-pyrrolidon vorgelegt und innerhalb von 30 Minuten mit 64,2 g Terephthalsäure versetzt. In diese Lösung wurden innerhalb von einer Stunde unter stetigem Rühren 87,6 g Kupfernitrat gegebene und homogenisiert. Abschließend wurden innerhalb von zwei Stunden 81 g Triethylamin zugegeben und eine Stunde nachgerührt.

Das Produkt wurde abfiltriert und mit ca. 2 Liter Wasser nachgewaschen und bei 150°C im Vakuumtrockenschrank getrocknet.

Die Ausbeute, bezogen auf die eingesetzte Menge an Kupfer, betrug 88 %.

Eine Aufnahme der Stickstoffisotherme (s. Abbildung) bei 77 K belegt die für mikroporöse Materialien typische Typ-I-Isotherme bis p/p° < 0,9.

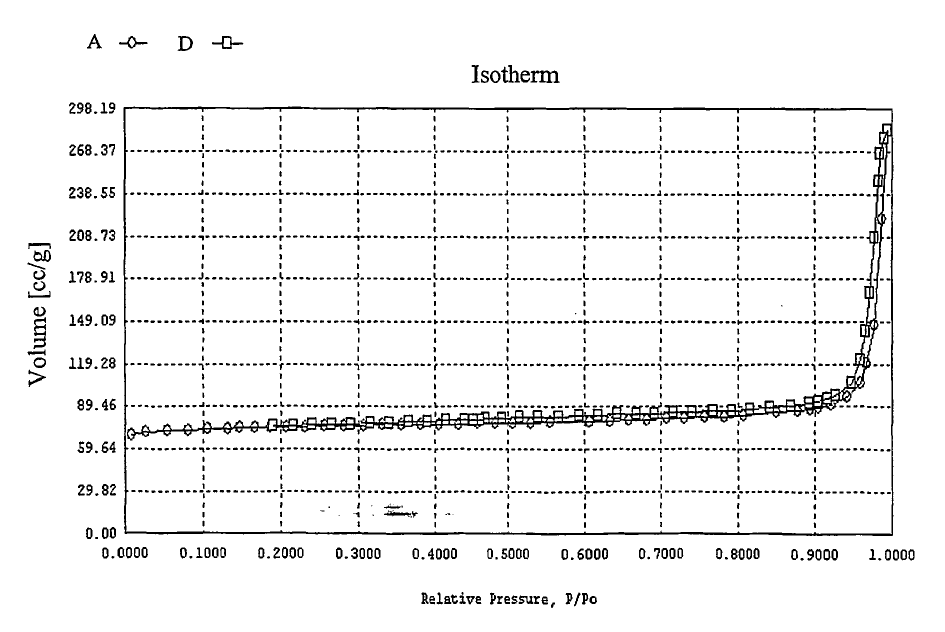

Die spezifische Langmuir-Oberfläche berechnet sich daraus zu 334 m²/g.

### Beispiel 3 (Herstellung von 4-tert.-Butylbenzoesäurevinylester) (nicht Teil der Erfindung)

In einem Autoklaven wurden 2,5g des in Beispiel 1 hergestellten Katalysators in 100 g 1-Methyl-2-pynolidon vorgelegt und mit 40 g 4-tert.-Butylbenzoesäure versetzt. Nach Aufpressen von 5 bar Stickstoff wurde auf 180°C aufgeheizt, anschließend 20 bar Acetylen aufgegeben und während 24 Stunden nachdosiert. Der Reaktionsaustrag wurde mittels GC analysiert und zeigte mit einem Umsatz von 94% auf die eingesetzte Säure eine Selektivität von 83% zum 4-tert.-Butylbenzoesäurevinylester.

### Beispiel 4 (Herstellung von 2-Methoxypropen): (nicht Teil der Erfindung)

In einen Differentialkreislaufreaktor wurden 55 g eines gemäß Beispiel 1 hergestellten Katalysators in Tablettenform eingebaut. Über eine HPLC-Pumpe wurden 1,5 g/h eines Flüssigkeitsstromes (Mischung Methanol/Cyclohexan 10 : 1) zudosiert. Propin wurde in einem Gasfluß von 6 g/h bei 250°C zugefahren. Der Umsatz betrug 30% an Propin mit einer Selektivität zu 2-Methoxypropen von 80%.

Bei einer Wiederholung des Versuches ohne Katalysator wurde kein Propin-Umsatz festgestellt.

## Patentansprüche

1. Verfahren zur Herstellung eines metallorganischen Gerüstmaterials umfassend die Umsetzung eines fluiden Gemischs umfassend ein Metallsalz mit mindestens einer wenigstens bidentaten zur Koordination mit Metallionen geeigneten organischen Verbindung in Gegenwart mindestens einer Base und einem Lösungsmittel, wobei das Lösungsmittel N-Methylpyrrolidon enthält, wobei das metallorganische Gerüstmaterial eine spezifische Oberfläche nach Langmuir von oberhalb 50 m²/g aufweist, wobei das Metallsalz ausgewählt wird unter Metallsalzen des Zinks oder Kupfers oder Gemischen davon und wobei die organische Verbindung ausgewählt wird unter substituierten oder unsubstituierten, einkernigen aromatischen Dicarbonsäuren.

2. Verfahren nach Anspruch 1, wobei die Base ausgewählt wird unter organischen Aminen.

## Claims

1. A process for preparing a metal-organic framework, which comprises reacting a fluid mixture comprising a metal salt with at least one at least bidentate organic compound capable of coordination to metal ions in the presence of at least one base and a solvent, wherein the solvent comprises N-methylpyrrolidone, the metal-organic framework has a specific surface area determined by the Langmuir method of more than 50m²/g, the metal salt is selected from among metal salts of zinc or copper and mixtures thereof and the organic compound is selected from among substituted or unsubstituted, monocyclic aromatic dicarboxylic acids.

2. The process according to claim 1, wherein the base is selected from among organic amines.

## Revendications

1. Procédé de fabrication d'un matériau de squelette métallo-organique qui comprend la réaction d'un mélange fluide comprenant un sel métallique avec au moins un composé organique au moins bidentate approprié pour une coordination avec des ions métalliques en présence d'au moins une base et d'un solvant, dans lequel le solvant contient de la N-méthylpyrrolidone, dans lequel le matériau de squelette métallo-organique présente une surface spécifique selon Langmuir supérieure à 50 m²/g, dans lequel le sel métallique est choisi parmi les sels métalliques de zinc ou de cuivre ou leurs mélanges et dans lequel le composé organique est choisi parmi les acides dicarboxyliques mononucléaires aromatiques substitués ou non substitués.

2. Procédé selon la revendication 1, dans lequel la base est choisie parmi les amines organiques.
